# EUROPEAN PATENT APPLICATION

(11) **EP 4 372 440 A1**
(43) Date of publication of application: **22.05.2024**
(21) Application number: 22841039.5
(22) Date of filing: 16.05.2022
(51) Int. Cl.: G02B 6/42, G02B 6/43

(54) **BEAM CONTROLLER AND BEAM CONTROLLING METHOD**

(30) Priority: 15.07.2021 CN 202110801155
(71) Applicant: Windsurf Technology (Wuxi) Ltd., Wuxi, Jiangsu 214122 (CN)
(72) Inventor: ZHENG, Xuezhe, Suzhou, Jiangsu 215000 (CN); LI, Chenlei, Suzhou, Jiangsu 215000 (CN)
(74) Representative: Becker, Eberhard
(86) International application number: PCT/CN2022/093063
(87) International publication number: WO 2023/284399

(57) **Abstract**

The present invention relates to a beam controller based on an optical phased array. The beam controller comprises an optical phased array, a free-space beam combining area, and a shared grating transmitter. The optical phased array comprises: a beam splitter and a waveguide array coupled to the beam splitter. The beam splitter is configured to equally split an initial light beam into a plurality of sub-beams. The waveguide array comprises: a plurality of waveguides arranged in one-to-one correspondence to the sub-beams. The waveguides are configured to receive and transmit the sub-beams. Transmission tail sections of the plurality of waveguides are concentrated in the free-space beam combining area in a fan shape manner. The free-space beam combining area is configured to: enable the plurality of sub-beams to be combined on an image plane. The shared grating transmitter is configured to: diffract and transmit a combined light beam that the plurality of sub-beams are combined on the image plane. The beam controller can control the combined light beam to have higher scan output efficiency while achieving large-angle emission.

## Description

### BACKGROUND

### Technical Field

The disclosure relates to the technical field of optical communication, and in particular, relates to a beam controller and a beam controlling method.

### Description of Related Art

Beam control, as one of the key technologies in fields such as laser radar and free-space optical communications, can also be applied to other fields such as holographic display and biological imaging. At present, with the development of silicon-based photonics technology, beam control is implemented using optical phased arrays (OPAs), which has the advantages of smaller size, faster speed, and lighter weight.

For instance, an optical phased array (OPA) includes a star coupler or a beam splitter and a waveguide array coupled to the star coupler or the beam splitter. The waveguide array is formed by N parallel waveguides arranged in a column. Herein, each waveguide is integrated with a controllable phase shifter, and each waveguide is also coupled to a second-order linear grating. Multiple second-order linear gratings are equidistantly arranged to form a one-dimensional optical antenna array serving as a laser output device.

However, an optical phased array (OPA) operates in the micron-scale wavelength range most of the time. In order to make the divergence angle of the beam transmitted by the second-order linear grating as small as possible, it is usually necessary to use a weak grating to emit the beam transmitted by the waveguide perpendicular to the surface of the waveguide over a longer distance. Due to the large size of weak gratings, on the premise of ensuring that no grating side lobes occur during beam scanning, the spacing between adjacent second-order linear gratings is small, which can easily lead to coupling crosstalk between corresponding parallel-arranged waveguides. Further, as the transmission distance of the waveguides increases, the crosstalk generated increases. The optical performance of the optical phased array may thus be significantly affected as a result, for example, its emission angle is decreased, and its scanning output efficiency is lowered.

### SUMMARY

### Technical Problems

Based on the above, the embodiments of the disclosure provide a beam controller and a beam controlling method capable of controlling a combined light beam to have higher scan output efficiency while achieving large-angle emission.

### Solutions to Problems

### Technical Solutions

To achieve the above, on the one hand, some embodiments of the disclosure provide a beam controller. The beam controller includes: an optical phased array, a free-space beam combining area, and a shared grating transmitter. The optical phased array includes: a beam splitter and a waveguide array coupled to the beam splitter. The beam splitter is configured to: equally split an initial light beam into a plurality of sub-beams. The waveguide array includes: a plurality of waveguides arranged in one-to-one correspondence to the sub-beams. The waveguides are configured to receive and transmit the sub-beams. Transmission tail sections of the plurality of waveguides are concentrated in the free-space beam combining area in a fan shape manner. The free-space beam combining area is configured to: enable the plurality of sub-beams to be combined on an image plane. The shared grating transmitter is configured to: diffract and transmit a combined light beam formed by the plurality of sub-beams combined on the image plane.

In the embodiments of the disclosure, the combination of the plurality of sub-beams and the emission of the combined light beam are performed independently. That is, the combination of the plurality of sub-beams is completed by free focusing in the free-space beam combining area, and the emission of the corresponding combined light beam is completed by diffraction performed by the shared grating transmitter. In this way, the structure of the shared grating transmitter may be designed only for the emission needs of the combined light beam, and is no longer limited by the needs of combination of the sub-beams. That is: there is no need to take into account the function of focusing the plurality of sub-beams into the combined light beam and the function of diffracting the emitting the combined light beam at the same time. Therefore, the shared grating transmitter can have a larger beam emission angle.

Further, since the transmission tail sections of the plurality of waveguides are concentrated in the free-space beam combining area in a fan shape manner, the spacing between the transmission tail sections of the waveguides can be gradually reduced without affecting the transmission effect of the main transmission portions in the waveguides. For instance, the distance between the output ends of adjacent two of the waveguides is smaller than the wavelength of the initial light beam or less than half of the wavelength of the initial light beam. Herein, the output ends of the waveguides are the ends at the junction between the transmission tail sections and the free-space beam combining area. Therefore, the occurrence of grating side lobes in the combined light beam after the plurality of sub-beams are focused can be effectively suppressed to ensure or improve the scanning output efficiency of the beam controller.

To sum up, the beam controller provided by the embodiments of the disclosure is capable of controlling the combined light beam to have higher scan output efficiency while achieving large-angle emission.

In some embodiments, an orthographic projection shape of the image plane on a reference plane includes: an arc with a curvature radius of R, an orthographic projection shape of the free-space beam combining area on the reference plane includes: a Rowland circle with a radius of 2R, and a center of the Rowland circle is located on the arc.

In some embodiments, a distance between output ends of adjacent two of the waveguides is less than a wavelength of the initial light beam. Optionally, each distance between the output ends of adjacent two of the waveguides is equal. In this way, the plurality of waveguides in the waveguide array have a same output spacing, which makes it easy to design and control a difference in transmission distance between adjacent two of the waveguides.

In some embodiments, a product of the difference in transmission distance between adjacent two of the waveguides and a group index of refraction of the waveguides is an integer multiple of the wavelength of the initial light beam. In this way, the plurality of sub-beams transmitted by the plurality of waveguides are easily spatially diffracted and superimposed in the free-space beam combining area to focus into the combined light beam on the image plane.

In some embodiments, the beam splitter includes a plurality of 1×2 cascaded waveguide beam splitters. Each of the waveguides includes a transmission head section and the transmission tail section connected in sequence. The transmission head sections of the plurality of waveguides are arranged in parallel, and a distance between adjacent two of the transmission head sections is greater than a first threshold.

In some other embodiments, the beam splitter includes a star coupler. Each of the waveguides includes the transmission head section, a transmission middle section, and the transmission tail section connected in sequence. The transmission head sections of the plurality of waveguides are concentrated on the star coupler in a fan shape manner. The transmission middle sections of the plurality of waveguides are arranged in parallel, and a distance between adjacent two of the transmission middle sections is greater than a second threshold.

The first threshold and the second threshold may be selected and set according to actual needs, as long as the spacing between the parallel transmission sections of adjacent two of the waveguides does not create coupling crosstalk in the transmission of the sub-beams.

In some embodiments, the waveguide array further includes a controllable phase shifter integrated on each of the waveguides. The controllable phase shifter is configured to control a phase of the sub-beam. In this way, by using the controllable phase shifter to adjust the phase of the sub-beam, the relative phase distribution of the plurality of sub-beams in the waveguide array can be controlled.

Optionally, the controllable phase shifter includes: a metal heating layer arranged on each of the waveguides.

Optionally, each of the waveguides is a doped waveguide, and the controllable phase shifter includes: a metal electrode connected to the doped waveguide.

In some embodiments, the waveguide array further includes a variable optical attenuator integrated in each of the waveguides. The variable optical attenuator is configured to adjust transmission power of the waveguide. Therefore, the variable optical attenuator may be used to control intensity of the sub-beam to achieve any form of beam combination.

On the other hand, some embodiments of the disclosure further provide a beam controlling method applied to the beam controller in the abovementioned some embodiments. The beam controlling method includes the following steps as described in the following paragraphs.

A beam splitter equally splits an initial light beam into a plurality of sub-beams and correspondingly transmits one sub-beam to one waveguide.

The plurality of waveguides respectively transmit corresponding one of the sub-beams to the free-space beam combining area.

The plurality of sub-beams are combined on the image plane in the free-space beam combining area.

The shared grating transmitter diffracts and transmits the combined light beam formed by the plurality of sub-beams combined on the image plane.

In some embodiments, the beam controlling method further includes the following steps.

The wavelength of the initial beam is adjusted, so that the scanning angle of the combined light beam changes in the first direction. The phases of the sub-beams are adjusted, so that the scanning angle of the combined light beam changes in the second direction. Herein, the first direction and the second direction are orthogonal to each other.

### Beneficial Effects of Disclosure

### Beneficial Effects

The beam controlling method provided by the embodiments of the disclosure is applied to the beam controller in the abovementioned some embodiments. The technical effects that can be achieved by the aforementioned beam controller can also be achieved by this beam controlling method, so description thereof is not provided in detail herein.

### BRIEF DESCRIPTION OF THE DRAWINGS

### Description of Accompanying Drawings

To make the technical solutions provided in the embodiments of the disclosure more clearly illustrated, several accompanying drawings required by the embodiments for description are briefly introduced as follows. Obviously, the drawings in the following description are merely some embodiments of the disclosure, and for a person having ordinary skill in the art, other drawings can be obtained based on these drawings without an inventive effort.
FIG. 1 is a schematic top view of a beam controller provided in an embodiment.
FIG. 2 is a schematic top view of another beam controller provided in an embodiment.
FIG. 3 is a schematic structural diagram of a free-space beam combining area provided in an embodiment.
FIG. 4 is a schematic structural diagram of a shared grating transmitter provided in an embodiment.
FIG. 5 is a schematic structural diagram of a waveguide array provided in an embodiment.
FIG. 6 is a schematic diagram of a combined optical path and an emission optical path of an initial light beam provided in an embodiment.
FIG. 7 is a schematic diagram of a combined optical path and an emission optical path of another initial light beam provided in an embodiment.

### Description of Reference Numerals:

100L beam controller, 1: optical phased array, 2: free-space beam combining area, 3: shared grating transmitter,
11: beam splitter, 12: waveguide array, 120: waveguide, 1210: transmission head section, 1215: transmission middle section,
1220: transmission tail section, 121: controllable phase shifter, 122: variable optical attenuator, 31: arc-shaped tooth,
111: 1×2 waveguide beam splitter, S₀: image plane, Lₐ: arc, R_{c}: Rowland circle, D1: distance between adjacent transmission middle sections,
D2: distance between adjacent transmission head sections, D3: distance between adjacent output ends,
O₁: center of Rowland circle, O₂: curvature center of image plane, O₃: curvature center of arc-shaped teeth,
α₁ and α₂: emission angles of the combined light beam in the vertical direction under different wavelength conditions, and
A and B: focus positions of the combined light beam in the horizontal direction under different phase conditions.

### DESCRIPTION OF THE EMBODIMENTS

### Implementation of the Disclosure

To facilitate understanding of the disclosure, the disclosure will be described more comprehensively below with reference to the relevant accompanying drawings. The embodiments of the disclosure are illustrated in the accompanying drawings. However, the disclosure can be implemented in many different forms and is not limited to the embodiments described herein. On the contrary, the purpose of providing these embodiments is to make the disclosed content of the disclosure more thorough and comprehensive.

Unless otherwise defined, all technical and scientific terms used in the specification have the same meaning as commonly understood by a person having ordinary skill in the art to which the disclosure belongs. The terms used herein in the specification of the disclosure are for the purpose of describing specific embodiments only, and are not intended to limit the disclosure.

It will be understood that when an element or a layer is referred to as being "on", "adjacent to", "connected to", or "coupled to" another element or layer, it means that the element or layer can be directly on, adjacent to, connected to, or coupled to another element or layer, or it means that an intervening element or layer may be present. In contrast, when an element is referred to as being "directly on", "directly adjacent to", "directly connected to", or "directly coupled to" another element or layer, it means that there is no intervening element or layer present.

It will be understood that, although the terms first, second, third, etc. may be used to describe various elements, components, regions, layers, and/or sections, these elements, components, regions, layers, and/or sections should not be limited by these terms. These terms are only used to distinguish one element, component, region, layer, or section from another element, component, region, layer, or section. Therefore, a first element, component, region, layer, or section discussed in the following paragraphs could be termed a second element, component, region, layer, or section without departing from the teachings of the disclosure.

Spatial relationship terms, such as "under", "below", "underlying", "beneath", "on", "above", etc., may be used herein to describe the relationship of one element or feature to other elements or features shown in the drawings. It should be understood that the spatially relative terms encompass different orientations of the device in use and operation in addition to the orientation depicted in the drawings. For instance, if the device in the drawings is turned over, elements or features described as "below", "under", or "beneath" other elements or features would then be oriented "above" the other elements or features. Therefore, the exemplary terms "below" and "under" may include both upper and lower orientations. In addition, the device may be otherwise oriented (e.g., rotated 90 degrees or at other orientations), and the spatial descriptors used herein are interpreted accordingly.

As used herein, the singular forms "a", "an", and "the" may include the plural forms as well, unless the context clearly dictates otherwise. It should also be understood that the terms "including/comprising" or "having" and the like designate the presence of stated features, integers, steps, operations, components, portions, or combinations thereof, but do not exclude the possibility of the presence or addition of one or more other features, integers, steps, operations, components, portions, or a combination thereof. Further, in the specification, the term "and/or" includes any and all combinations of the associated listed items.

The embodiments of the disclosure are described herein with reference to cross-sectional illustrations that are schematic illustrations of idealized embodiments (and intermediate structures) of the disclosure, such that variations in the shapes shown due to, for example, manufacturing techniques and/or tolerances, are contemplated. Therefore, the embodiments of the disclosure should not be limited to the specific shapes of regions shown herein but are to include deviations in shapes due to, for example, manufacturing techniques. The regions shown in the drawings are schematic in nature and their shapes do not represent the actual shapes of the regions of the device and do not limit the scope of the disclosure.

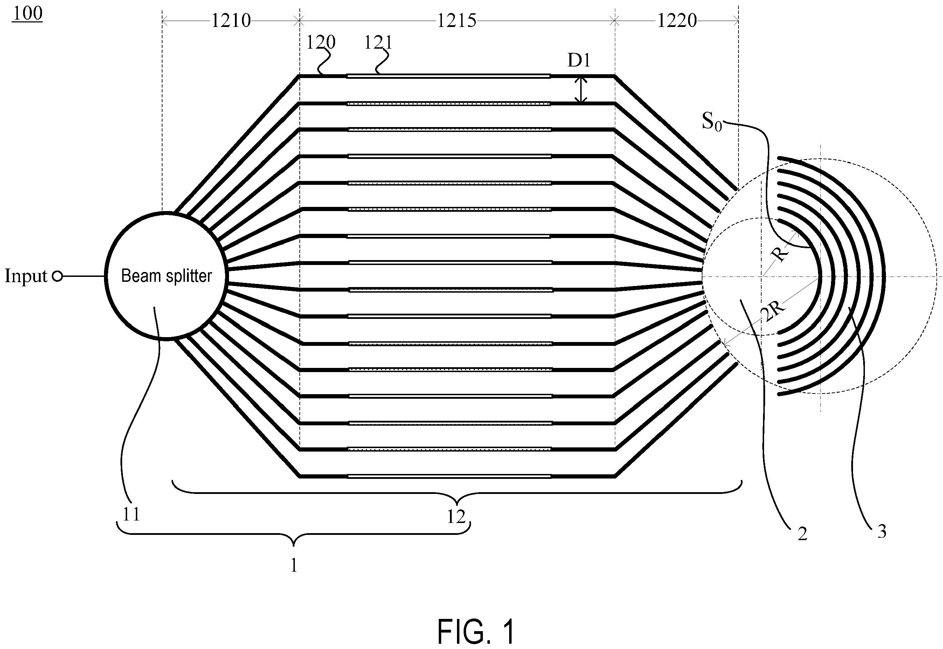

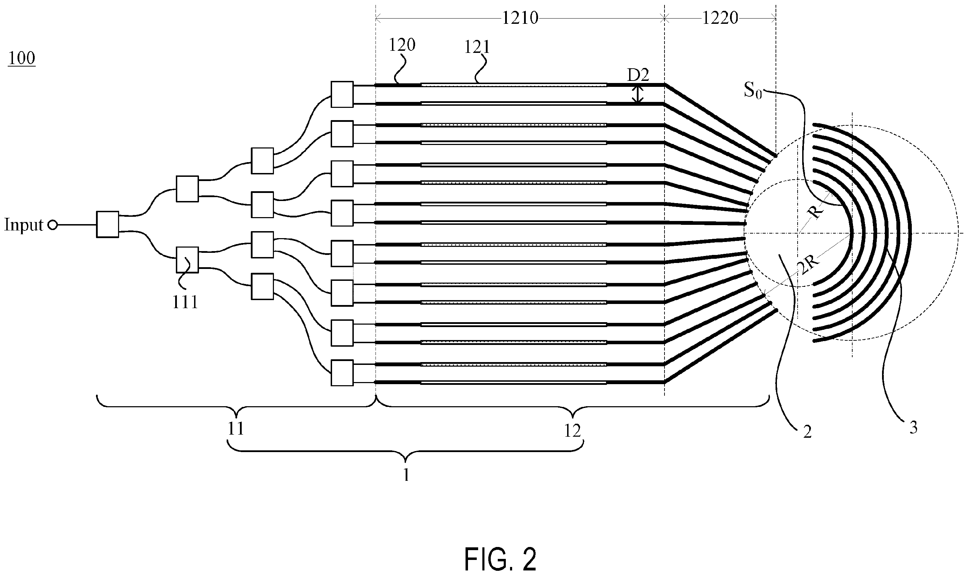

With reference to FIG. 1 and FIG. 2, in some embodiments of the disclosure, a beam controller 100 based on an optical phased array is provided. The beam controller 100 includes: an optical phased array 1, a free-space beam combining area 2, and a shared grating transmitter 3. The optical phased array 1 includes: a beam splitter 11 and a waveguide array 12 coupled to the beam splitter 11. The beam splitter 11 is configured to: equally split an initial light beam into a plurality of sub-beams. The waveguide array 12 includes: a plurality of waveguides 120 arranged in one-to-one correspondence to the sub-beams. The waveguides 120 are configured to receive and transmit the sub-beams. Transmission tail sections of the plurality of waveguides 120 are concentrated in the free-space beam combining area 2 in a fan shape manner. The free-space beam combining area 2 is configured to: enable the plurality of sub-beams to be combined on an image plane S₀. The shared grating transmitter 3 is configured to: diffract and transmit a combined light beam formed by the plurality of sub-beams combined on the image plane S₀.

The beam splitter 11 may be a star coupler or may be formed by a plurality of 1×2 cascaded waveguide beam splitters. The beam splitter 11 is configured to equally split the initial light beam into the plurality of sub-beams, and the beam splitter 11 has: at least one input end and a plurality of output ends. The input end of the beam splitter 11 is coupled to a light source, and one output end of the beam splitter 11 outputs one sub-beam.

Optionally, the light source is a laser chip, and a light beam emitted by the light source is: a near-infrared light beam with a wavelength between 950nm and 1550nm. The light beam transmitted from the light source to the beam splitter 11 is the initial light beam, and a wavelength of the initial light beam may be adjusted by the light source.

The number of waveguides 120 in the waveguide array 12 corresponds to the number of output ends of the beam splitter 11, for example, the two numbers are the same. The waveguides 120 are planar optical waveguides. The beam splitter 11 and the waveguide array 12 may be made of silicon dioxide (SiO₂), glass, lithium niobate (LiNbO3), III-V semiconductor compounds, silicon on insulators (SOI/SIMOX), silicon nitride (SiN), silicon oxynitride (SiON), high molecular polymers, and other materials.

Depending on the structure of the beam splitter 11, the structures of the waveguides 120 are also different.

In some embodiments, as shown in FIG. 1, the beam splitter 11 is a star coupler, and the plurality of output ends of the beam splitter 11 are distributed along a circumference. Each of the waveguides 120 includes a transmission head section 1210, a transmission middle section 1215, and a transmission tail section 1220 connected in sequence. The transmission head sections 1210 of the plurality of waveguides 120 are concentrated on the star coupler in a fan shape manner, and the transmission head section 1210 of one waveguide 120 is coupled to one output end of the star coupler. The transmission middle sections 1215 of the plurality of waveguides 120 are arranged in parallel, and a distance D1 between two adjacent transmission middle sections 1215 is greater than a first threshold. The transmission tail sections of the plurality of waveguides 120 are concentrated in the free-space beam combining area 2 in a fan shape manner.

In some other embodiments, as shown in FIG. 2, the beam splitter 11 is formed by a plurality of 1×2 cascaded waveguide beam splitters 111, and the plurality of output ends of the beam splitter 11 are arranged in parallel. Each of the waveguides 120 includes the transmission head section 1210 and the transmission tail section 1220 connected in sequence. The transmission head sections 1210 of the plurality of waveguides 120 are arranged in parallel, and a distance D2 between two adjacent transmission head sections 1210 is greater than a second threshold.

Herein, it can be understood that a transmission distance of each waveguide 120 is usually longer, but a length of the transmission tail section 1220 of the waveguide 120 needs to be set as small as possible, so that a main transmission portion in the waveguide 120 is a transmission section arranged parallel to the adjacent waveguide 120, such as the transmission middle section 1215 in FIG. 1 or the transmission head section 1210 in FIG. 2. Based on the above, the first threshold and the second threshold may be selected and set according to actual needs, as long as a spacing between the parallel transmission sections of two adjacent waveguides 120 does not create coupling crosstalk in the transmission of the sub-beams. Since the length of the transmission tail section 1220 of each of the waveguide 120 is short, although the transmission tail sections 1220 of the plurality of waveguides 120 are concentrated in a fan shape manner so that a gap between two adjacent transmission tail sections 1220 gradually decreases, the coupling crosstalk between two adjacent transmission tail sections 1220 in the transmission of the sub-beams may be negligible.

In the embodiments of the disclosure, the transmission tail sections of the plurality of waveguides 120 are concentrated in the free-space beam combining area 2 in a fan shape manner, so that the combination of the plurality of sub-beams outputted by the waveguide array 12 may be completed in the free-space beam combining area 2. For instance, the plurality of sub-beams are focused on the image plane S₀, and the image plane S₀ is a virtual imaging plane after the plurality of sub-beams are focused in the free-space beam combining area 2. The free-space beam combining area 2 is a free propagation region (FPR for short).

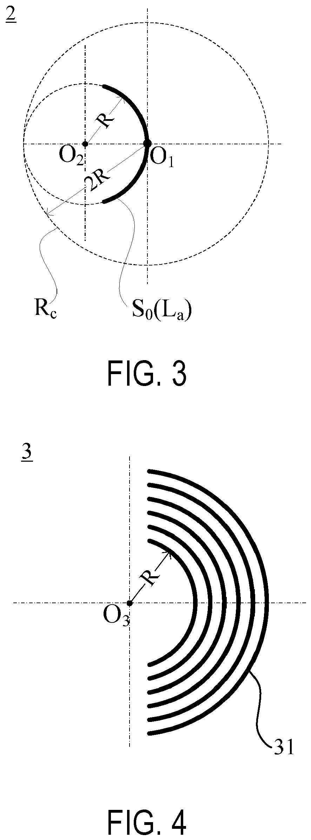

Optionally, as shown in FIG. 3, the image plane S₀ is an arc surface, and an orthographic projection shape of the image plane S₀ on a reference plane includes: an arc Lₐ with a curvature radius of R. Correspondingly, an orthographic projection shape of the free-space beam combining area 2 on the reference plane includes: a Rowland circle R_{c} with a radius of 2R, and a center O₁ of the Rowland circle R_{c} is located on the arc Lₐ.

Herein, the reference plane refers to a plane parallel to the plane where the waveguide array 12 is located, such as the horizontal plane shown in FIG. 1, FIG. 2, and FIG. 3. Further, based on the above, the transmission tail sections of the plurality of waveguides 120 being concentrated in the free-space beam combining area 2 in a fan shape manner means that the output ends of the plurality of waveguides 120 are distributed along a circumference of the Rowland circle R_{c}.

In the embodiments of the disclosure, the shared grating transmitter 3 is configured to diffract and transmit the combined light beam formed by the plurality of sub-beams combined on the image plane S₀, and the shared grating transmitter 3 may adopt a concentric second-order grating structure. For instance, as shown in FIG. 4, the shared grating transmitter 3 is formed by a plurality of arc-shaped teeth 31 with a same curvature center O₃. In the embodiments of the disclosure, the number, curvature radius, etc. of the arc-shaped teeth 31 are not limited, as long as the combined light beam may be directly emitted from the image plane S₀ into the shared grating transmitter 3.

Optionally, the image plane S₀ is located in the area surrounded by the arc-shaped teeth 31 and the curvature center O₃. For instance, with reference to FIG. 3 and FIG. 4 together, a curvature center O₂ of the image plane S₀ is the same as the curvature center O₃ of the arc-shaped teeth 31. Alternatively, for another instance, with reference to FIG. 3 and FIG. 4 together again, the image plane S₀ overlaps with an inner surface of the arc-shaped tooth 31 with the smallest curvature radius in the shared grating transmitter 3.

In this way, the combined light beam formed by the plurality of sub-beams combined on the image plane S₀ may be linearly transmitted to the shared grating transmitter 3 in a focusing direction and diffracted and emitted by the shared grating transmitter 3. That is, the combined light beam formed by the plurality of sub-beams focused on the image plane S₀ may be transmitted to the shared grating transmitter 3 in a light emission direction perpendicular to a circumferential direction of the image plane S₀. The shared grating transmitter 3 has a wavelength selection function, so under the condition that a wavelength of the combined beam satisfies the grating equation of the shared grating transmitter 3, the combined light beam may be diffracted and emitted at a specific angle through the shared grating transmitter 3. Further, when the wavelength and phase of the initial light beam are different, the position where the corresponding combined light beam is focused on the image plane S₀ and an emission angle of the combined light beam are also different. The shared grating transmitter 3 adopts the plurality of arc-shaped teeth 31 arranged concentrically, and the image plane S₀ is located in the area surrounded by the arc-shaped teeth 31 and its curvature center O₃. In this way, the plurality of arc-shaped teeth 31 may be treated as a whole to diffract and emit the combined light beam at any position on the image plane S₀.

In addition, since the shared grating transmitter 3 adopts the above structure, a spacing between two adjacent arc-shaped teeth 31 does not create coupling crosstalk in the diffraction and emission of the combined light beam. In this way, the number of waveguides 120 in the waveguide array 12 does not need to be reduced as much as possible due to the small size of the shared grating transmitter 3, which is beneficial to improving the transmission power of the beam controller 100.

In view of the above, in the embodiments of the disclosure, the combination of the plurality of sub-beams and the emission of the combined light beam are performed independently. That is, the combination of the plurality of sub-beams is completed by free focusing in the free-space beam combining area 2, and the emission of the corresponding combined light beam is completed by diffraction performed by the shared grating transmitter 3. In this way, the structure of the shared grating transmitter 3 may be designed only for the emission needs of the combined light beam, and is no longer limited by the needs of combination of the sub-beams. That is: there is no need to take into account the function of focusing the plurality of sub-beams into the combined light beam and the function of diffracting the emitting the combined light beam at the same time. Therefore, the shared grating transmitter 3 may have a larger beam emission angle.

Further, since the transmission tail sections of the plurality of waveguides 120 are concentrated in the free-space beam combining area 2 in a fan shape manner, the spacing between the transmission tail sections 1220 of the waveguides 120 may be gradually reduced without affecting the transmission effect of the main transmission portions in the waveguides 120. For instance, the distance between the output ends of two adjacent waveguides 120 is smaller than the wavelength of the initial light beam or less than half of the wavelength of the initial light beam. Herein, the output ends of the waveguides 120 are the ends at the junction between the transmission tail sections 1220 and the free-space beam combining area 2. Therefore, the occurrence of grating side lobes in the combined light beam after the plurality of sub-beams are focused may be effectively suppressed to ensure or improve the scanning output efficiency of the beam controller 100.

It should be noted that in one possible implementation, a product of a difference in transmission distance between two adjacent waveguides 120 and a group index of refraction of the waveguides 120 is an integer multiple of the wavelength of the initial light beam. In this way, the plurality of sub-beams transmitted by the plurality of waveguides 120 are easily spatially diffracted and superimposed in the free-space beam combining area 2 to focus into the combined light beam on the image plane S₀.

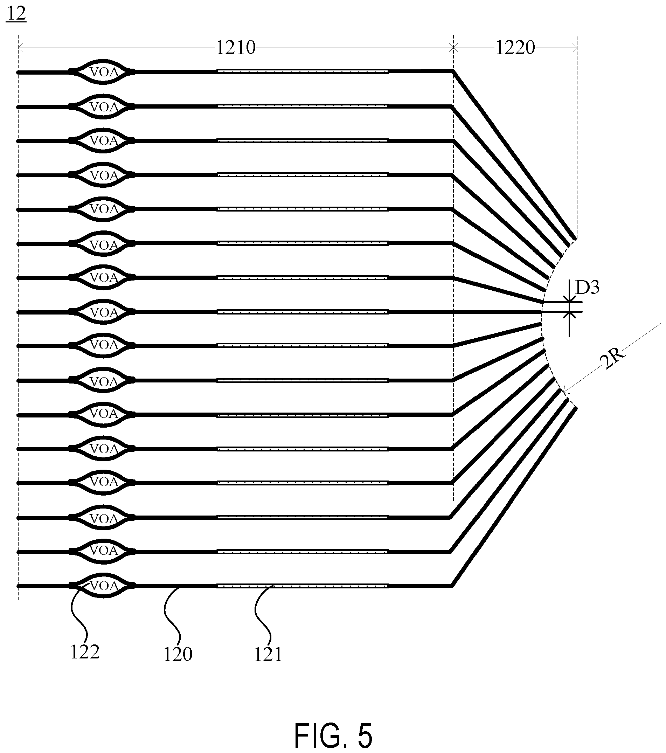

Based on the above, optionally, as shown in FIG. 5, each distance D3 between the output ends of two adjacent waveguides 120 is equal, so that the plurality of waveguides 120 in the waveguide array 12 have a same output spacing, which makes it easy to design and control the difference in transmission distance between two adjacent waveguides 120.

In some embodiments, with reference to FIG. 5 again, the waveguide array 12 further includes a controllable phase shifter 121 integrated on each of the waveguides. The controllable phase shifter 121 is configured to control a phase of the sub-beam. In this way, by using the controllable phase shifter 121 to adjust the phase of the sub-beam, the relative phase distribution of the plurality of sub-beams in the waveguide array 12 may be controlled.

A structure of the controllable phase shifter 121 may be selected and set according to actual needs. For instance, the controllable phase shifter 121 is a metal heating layer disposed on each waveguide 120, and in this way, the phase of the corresponding sub-beam may be controlled by the heating temperature provided by the metal heating layer. Alternatively, for another instance, each of the waveguides 120 is a doped waveguide, and the controllable phase shifter 121 is a metal electrode connected to the waveguide 120, so that the phase of the corresponding sub-beam may be controlled through an electrical signal transmitted by the metal electrode.

Based on the above, by adjusting the wavelength of the initial light beam, the emission angle of the combined light beam may be changed in a vertical plane, so that scanning of the combined light beam in a first direction (e.g., a vertical direction) may be achieved. The wavelength of the initial beam may determine a scanning angle of the combined light beam in the vertical direction. By controlling the phase change of the corresponding sub-beam by the controllable phase shifter 121, the combined light beam may be focused on different positions in the circumferential direction of the image plane S₀ in a horizontal plane, so that scanning of the combined light beam in a horizontal direction may be achieved. The phase of each of the sub-beams may determine the scanning angle of the combined light beam in a second direction (e.g., the horizontal direction). In addition, the adjustment of the wavelength of the initial light beam and the adjustment of the phase of each of the sub-beams may be either selectively or simultaneously.

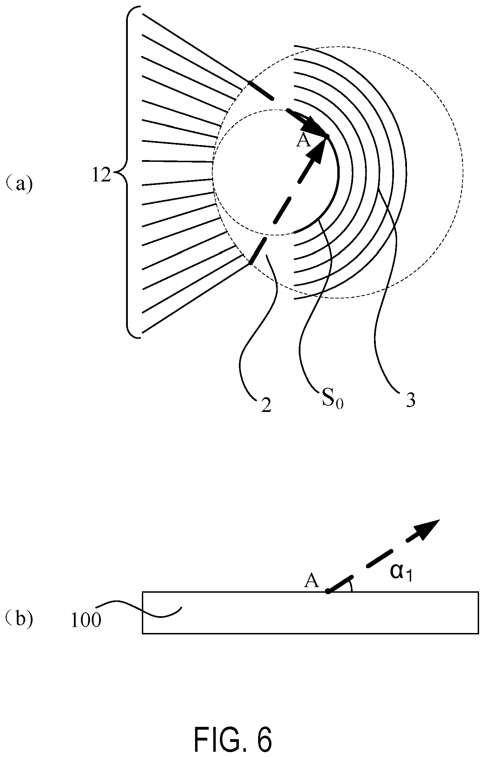

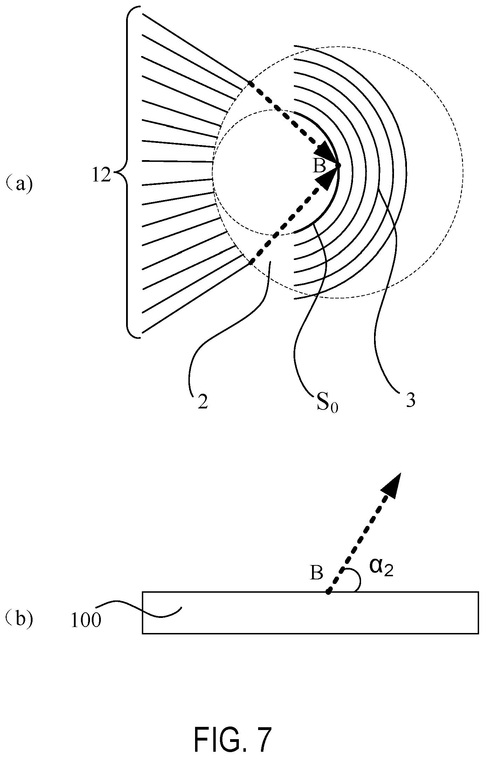

In order to more clearly illustrate the effects of different wavelengths and different phases on the combined light beam, FIG. 6 and FIG. 7 show optical paths of two combined light beams under control of different wavelengths and different phases.

As shown in FIG. 6, the wavelength of the initial light beam is λ₁, and the phase control of the sub-beam adopts a first control method. The plurality of sub-beams transmitted by the waveguide array 12 to the free-space beam combining area 2 may be diffracted and superimposed in the free space, focused on a point A position (shown in (a) of FIG. 6) of the image plane S₀, and then emitted from the horizontal plane (i.e., a surface of the beam controller 100) at an angle α₁ under the action of the shared grating transmitter 3 (shown in (b) of FIG. 6).

As shown in FIG. 7, the wavelength of the initial light beam is λ₂, and the phase control of the sub-beam adopts a second control method, where λ₂≠λ₁, and the first control method is different from the second control method. The plurality of sub-beams transmitted by the waveguide array 12 to the free-space beam combining area 2 may be diffracted and superimposed in the free space, focused on a point B position (shown in (a) of FIG. 7) of the image plane S₀, and then emitted from the horizontal plane (i.e., the surface of the beam controller 100) at an angle α₂ under the action of the shared grating transmitter 3 (shown in (b) of FIG. 7).

In some embodiments, with reference to FIG. 5 again, the waveguide array 12 further includes: a variable optical attenuator (VOA for short) integrated in each of the waveguides 120. The variable optical attenuator 122 is configured to adjust transmission power of the waveguide 120. Therefore, the variable optical attenuator 122 may be used to control intensity of the sub-beam to achieve any form of beam combination.

A structure of the variable optical attenuator 122 may be selected and set according to actual needs. Optionally, the variable optical attenuator 122 is formed by a Mach-Zehnder interferometer (MZI). By adjusting the phase of each of the sub-beams using a Mach-Zehnder interferometer (MZI), any proportion of power attenuation may be achieved.

In some embodiments of the disclosure, a beam controlling method applied to the beam controller 100 in some of the abovementioned embodiments is provided. The beam controlling method includes S100 to S400.

In S100, the beam splitter 11 equally splits an initial light beam into a plurality of sub-beams and correspondingly transmits one sub-beam to one waveguide 120.

Herein, the beam splitter 11 may be a star coupler or may be formed by a plurality of 1×2 cascaded waveguide beam splitters. The input end of the beam splitter 11 is coupled to a light source, and one output end of the beam splitter 11 is correspondingly coupled to one waveguide 120.

In addition, the light source is, for example, a laser chip, and a light beam emitted by the light source may be: a near-infrared light beam with a wavelength between 950nm and 1550nm. The light beam transmitted from the light source to the beam splitter 11 is the initial light beam, and a wavelength of the initial light beam may be adjusted by the light source.

In S200, the plurality of waveguides 120 transmit the corresponding sub-beams to the free-space beam combining area 2.

Herein, the transmission tail sections of the plurality of waveguides 120 are concentrated in the free-space beam combining area 2 in a fan shape manner.

In addition, the transmission distance of each waveguide 120 is usually longer, but the length of the transmission tail section 1220 of the waveguide 120 needs to be set as small as possible, so that the main transmission portion in the waveguide 120 is a transmission section arranged parallel to the adjacent waveguide 120, such as the transmission middle section 1215 in FIG. 1 or the transmission head section 1210 in FIG. 2. Based on the above, the spacing between the parallel transmission sections of two adjacent waveguides 120 is limited to the extent that it does not create coupling crosstalk in the transmission of the sub-beams. Since the length of the transmission tail section 1220 of each of the waveguide 120 is short, although the transmission tail sections 1220 of the plurality of waveguides 120 are concentrated in a fan shape manner so that the gap between two adjacent transmission tail sections 1220 gradually decreases, the coupling crosstalk between two adjacent transmission tail sections 1220 in the transmission of the sub-beams may be negligible.

In S300, the plurality of sub-beams are combined on the image plane S₀ in the free-space beam combining area 2.

The transmission tail sections of the plurality of waveguides 120 are concentrated in the free-space beam combining area 2 in a fan shape manner, so that the combination of the plurality of sub-beams outputted by the waveguide array 12 may be completed in the free-space beam combining area 2. For instance, the plurality of sub-beams are focused on the image plane S₀, and the image plane S₀ is a virtual imaging plane after the plurality of sub-beams are focused in the free-space beam combining area 2. The free-space beam combining area 2 is a free propagation region (FPR for short).

In S400, the shared grating transmitter 3 diffracts and transmits the combined light beam formed by the plurality of sub-beams combined on the image plane S₀.

The combined light beam formed by the plurality of sub-beams combined on the image plane S₀ may be linearly transmitted to the shared grating transmitter 3 in the focusing direction and diffracted and emitted by the shared grating transmitter 3. That is, the combined light beam formed by the plurality of sub-beams focused on the image plane S₀ may be transmitted to the shared grating transmitter 3 in the light emission direction perpendicular to the circumferential direction of the image plane S₀. The shared grating transmitter 3 has a wavelength selection function, so under the condition that the wavelength of the combined beam satisfies the grating equation of the shared grating transmitter 3, the combined light beam may be diffracted and emitted at a specific angle through the shared grating transmitter 3. Further, when the wavelength and phase of the initial light beam are different, the position where the corresponding combined light beam is focused on the image plane S₀ and the emission angle of the combined light beam are also different.

The beam controlling method provided by the embodiments of the disclosure is applied to the beam controller in some embodiments. The technical effects that can be achieved by the aforementioned beam controller can also be achieved by this beam controlling method, so description thereof is not provided in detail herein.

In some embodiments, the beam controlling method further includes S500.

In S500, the wavelength of the initial beam is adjusted, so that the scanning angle of the combined light beam changes in the first direction. The phases of the sub-beams are adjusted, so that the scanning angle of the combined light beam changes in the second direction. Herein, the first direction and the second direction are orthogonal to each other.

Herein, the wavelength of the initial light beam may be adjusted by controlling the light source.

The phase of each of the sub-beams may be achieved by the controllable phase shifter 121 integrated on each waveguide 120. For instance, the controllable phase shifter 121 is a metal heating layer disposed on each waveguide 120, and in this way, the phase of the corresponding sub-beam may be controlled by the heating temperature provided by the metal heating layer. Alternatively, for another instance, each of the waveguides 120 is a doped waveguide, and the controllable phase shifter 121 is a metal electrode connected to each waveguide 120, so that the phase of the corresponding sub-beam may be controlled through the electrical signal transmitted by the metal electrode.

The first direction is, for example, the vertical direction, and the second direction is, for example, the horizontal direction.

In addition, there is no necessary restriction on the order among S500, S300, and S400, that is, any one of them may be executed before or at the same time.

In some embodiments, the beam controlling method further includes S600.

In S600, the transmission power of each waveguide is adjusted, so that the intensity of the sub-beam changes.

Herein, the transmission power of each waveguide may be achieved by the variable optical attenuator 122 integrated in each waveguide 120.

For instance, the variable optical attenuator 122 is formed by a Mach-Zehnder interferometer (MZI). By adjusting the phase of each of the sub-beams using a Mach-Zehnder interferometer (MZI), any proportion of power attenuation may be achieved. Therefore, the intensity of the sub-beams may be controlled to achieve any form of beam combination.

In addition, there is no necessary restriction on the order among S600, S300, S400, and S500, that is, any one of them may be executed before or at the same time.

The technical features of the above-described embodiments may be combined arbitrarily. In order to simplify the description, not all possible combinations of the technical features in the above embodiments are described. However, as long as there is no contradiction in the combinations of these technical features, these combinations should be considered to be within the scope of the description in this specification.

The abovementioned embodiments only represent several embodiments of the disclosure, and the descriptions thereof are specific and detailed, but should not be construed as a limitation on the scope of the invention patent. It should be pointed out that for a person having ordinary skill in the art, without departing from the concept of the disclosure, several modifications and improvements can be made, which all belong to the protection scope of the disclosure. Therefore, the protection scope of the patent of the disclosure should be subject to the appended claims.

## Claims

1. A beam controller, **characterized in** comprising: an optical phased array, a free-space beam combining area, and a shared grating transmitter, wherein the optical phased array comprises: a beam splitter and a waveguide array coupled to the beam splitter,
the beam splitter is configured to: equally split an initial light beam into a plurality of sub-beams,
the waveguide array comprises: a plurality of waveguides arranged in one-to-one correspondence to the sub-beams, and the waveguides are configured to receive and transmit the sub-beams,
transmission tail sections of the plurality of waveguides are concentrated in the free-space beam combining area in a fan shape manner, and the free-space beam combining area is configured to: enable the plurality of sub-beams to be combined on an image plane,
the shared grating transmitter is configured to: diffract and transmit a combined light beam formed by the plurality of sub-beams combined on the image plane.

2. The beam controller according to claim 1, **characterized in that**
an orthographic projection shape of the image plane on a reference plane comprises: an arc with a curvature radius of R,
an orthographic projection shape of the free-space beam combining area on the reference plane comprises: a Rowland circle with a radius of 2R, and a center of the Rowland circle is located on the arc.

3. The beam controller according to claim 1, **characterized in that** a distance between output ends of adjacent two of the waveguides is less than a wavelength of the initial light beam.

4. The beam controller according to claim 3, **characterized in that** each distance between the output ends of adjacent two of the waveguides is equal.

5. The beam controller according to claim 1, **characterized in that** a product of a difference in transmission distance between adjacent two of the waveguides and a group index of refraction of the waveguides is an integer multiple of a wavelength of the initial light beam.

6. The beam controller according to claim 1, **characterized in that** the beam splitter comprises a star coupler, and each of the waveguides comprises a transmission head section, a transmission middle section, and the transmission tail section connected in sequence,
the transmission head sections of the plurality of waveguides are concentrated on the star coupler in a fan shape manner,
the transmission middle sections of the plurality of waveguides are arranged in parallel, and a distance between adjacent two of the transmission middle sections is greater than a first threshold.

7. The beam controller according to claim 1, **characterized in that** the beam splitter comprises a plurality of 1×2 cascaded waveguide beam splitters,
each of the waveguides comprises a transmission head section and the transmission tail section connected in sequence, the transmission head sections of the plurality of waveguides are arranged in parallel, and a distance between adjacent two of the transmission head sections is greater than a second threshold.

8. The beam controller according to claim 1, **characterized in that** the waveguide array further comprises: a controllable phase shifter integrated on each of the waveguides, and the controllable phase shifter is configured to control a phase of the sub-beam.

9. The beam controller according to claim 8, **characterized in that**
the controllable phase shifter comprises: a metal heating layer arranged on each of the waveguides, or
each of the waveguides is a doped waveguide, and the controllable phase shifter comprises: a metal electrode connected to the doped waveguide.

10. The beam controller according to claim 1, **characterized in that** the waveguide array further comprises: a variable optical attenuator integrated in each of the waveguides, and the variable optical attenuator is configured to adjust transmission power of the waveguide.

11. A beam controlling method, **characterized in** comprising:
equally splitting an initial light beam into a plurality of sub-beams and correspondingly transmitting one sub-beam to one waveguide by a beam splitter;
respectively transmitting, by a plurality of the waveguides, the corresponding sub-beams to a free-space beam combining area;
combining the plurality of sub-beams on an image plane in the free-space beam combining area; and
diffracting and transmitting, by a shared grating transmitter, a combined light beam formed by the plurality of sub-beams combined on the image plane.

12. The beam controlling method according to claim 11, **characterized in that** the beam controlling method further comprises:
adjusting a wavelength of the initial beam, so that a scanning angle of the combined light beam changes in a first direction; and
adjusting phases of the sub-beams, so that the scanning angle of the combined light beam changes in a second direction,
the first direction and the second direction are orthogonal to each other.
